(19) Europäisches Patentamt
European Patent Office
Office européen des brevets

(11) **EP 4 289 804 A1**

(12) **EUROPEAN PATENT APPLICATION**

(43) Date of publication:
**13.12.2023 Bulletin 2023/50**

(21) Application number: **23169804.4**

(22) Date of filing: **25.04.2023**

(51) International Patent Classification (IPC):
**C04B 35/117** (2006.01)   **C04B 35/14** (2006.01)
**C04B 35/185** (2006.01)   **C04B 35/565** (2006.01)
**C04B 35/573** (2006.01)   **C04B 35/584** (2006.01)
**C04B 35/80** (2006.01)   **B32B 18/00** (2006.01)
**B29C 70/20** (2006.01)   **B29C 70/54** (2006.01)

(52) Cooperative Patent Classification (CPC):
**B29C 70/202; B29C 70/547; B32B 18/00;**
**C04B 35/117; C04B 35/14; C04B 35/185;**
**C04B 35/565; C04B 35/573; C04B 35/584;**
**C04B 35/80;** C04B 2235/522; C04B 2235/5224;
C04B 2235/5228; C04B 2235/5232;
C04B 2235/524;                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.06.2022 US 202217835083**

(71) Applicant: **General Electric Company**
**Schenectady, NY 12345 (US)**

(72) Inventors:
• **SHIANG, Joseph John**
**12345 Schenectady (US)**
• **WEAVER, Jared Hogg**
**12345 Schenectady (US)**

(74) Representative: **Openshaw & Co.**
**8 Castle Street**
**Farnham, Surrey GU9 7HR (GB)**

(54)   **COMPOSITE COMPONENTS AND METHODS OF DENSIFYING COMPOSITE COMPONENTS**

(57)    Composite components and methods of densifying composite components are provided. For example, a composite component (100) includes a first ply (112) having a first plurality (114) of unidirectional arrays of fiber tows (102) extending in a first direction (116) and a second ply (122) having a second plurality (124) of unidirectional arrays of fiber tows (102) extending in a second direction (126). A first fluid pathway (115) is defined in the first ply (112) that has a first length ($l_1$) greater than a first width ($w_1$), and a second fluid pathway (125) is defined in the second ply that has a second length ($l_2$) greater than a second width ($w_2$). The first and second fluid pathways (115, 125) may improve densification of the composite component (100) by improving penetration of a densification fluid in the composite component (100).

FIG. -1-

EP 4 289 804 A1

(52) Cooperative Patent Classification (CPC): (Cont.)
     C04B 2235/5244; C04B 2235/5248;
     C04B 2235/5252; C04B 2235/5268;
     C04B 2235/614; C04B 2235/945; C04B 2235/96;
     C04B 2237/38; C04B 2237/62

**Description**

FIELD

The present subject matter relates generally to composite components. More particularly, the present subject matter relates to methods of densifying composite components.

BACKGROUND

Composite materials, including materials formed with a reinforced matrix material can be used to form components for various applications. For example, reinforced ceramic matrix composites ("CMCs") comprising fibers dispersed in continuous ceramic matrices of the same or a different composition are well suited for structural applications because of their toughness, thermal resistance, high-temperature strength, and chemical stability. Such composites typically have high strength-to-weight ratio that renders them attractive in applications in which weight is a concern, such as in aeronautic applications. Their stability at high temperatures renders CMCs very suitable in applications in which components are in contact with a high-temperature gas, such as in a gas turbine engine.

BRIEF DESCRIPTION OF THE DRAWINGS

A full and enabling disclosure, including the best mode thereof, directed to one of ordinary skill in the art, is set forth in the specification, which makes reference to the appended figures, in which:

FIG. 1 provides a schematic view of a portion of a composite component formed from a plurality of composite plies.
FIG. 2 provides an exploded view of the plurality of composite plies forming the composite component of FIG. 1.
FIG. 3 provides a schematic cross-section view of a composite component, such as the portion of the composite component of FIG. 1, illustrating the fiber direction of each plurality of unidirectional arrays of fiber tows.
FIG. 4 provides a schematic view of a composite component formed from a plurality of composite plies having a plurality of fluid pathways defined therein such that the composite component has a gradient of voids decreasing inward from an outer layer of the composite component.
FIG. 5 provides a flow chart diagram illustrating a method of forming a composite component.

DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosed embodiments.
As used herein, the terms "first," "second," and "third" may be used interchangeably to distinguish one component from another and are not intended to signify location or importance of the individual components.
The terms "coupled," "fixed," "attached to," and the like refer to both direct coupling, fixing, or attaching, as well as indirect coupling, fixing, or attaching through one or more intermediate components or features, unless otherwise specified herein.
The singular forms "a," "an," and "the" include plural references unless the context clearly dictates otherwise.
Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. The approximating language may refer to being within a +/- 1, 2, 4, 5, 10, 15, or 20 percent margin in either individual values, range(s) of values, and/or endpoints defining range(s) of values.
Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.
In forming a composite component, voids or openings may remain in the composite component after initial processing of the component, and the voids or openings may be filled through a densification process. For example, for CMC components, a melt infiltration (MI) densification process, a chemical vapor infiltration (CVI) densification process, or both MI and CVI, e.g., in a multi-step densification process, may be used to fill the voids or openings during conversion of the ceramic matrix material from a precursor material to the desired ceramic matrix material. MI processes typically utilize a molten or liquid substance as a densification fluid that fills the voids or openings, and CVI processes typically utilize a gas or vapor densification fluid. CVI of fiber composite preforms can result in materials that have substantially higher temperature capability (e.g., at least 300°F higher) than composite materials where a ceramic matrix (e.g., a silicon carbide (SiC) matrix) is formed by reactive melt infiltration, e.g., of silicon (Si). However, CVI typically is limited to relatively thin components because there is a tradeoff between the effective gas diffusivity and the chemical reaction rate. For instance, as the vapor is infiltrating the voids in the component to densify the component, void spaces near the outer surface of the component can be filled by infiltration before the vapor reaches voids in the component further inward from the outer surface, thereby "choking off" infiltration pathways and preventing densification of inner portions of the component. Such choking off can occur in other densification processes as well, such as MI. Accordingly, improved densification would be desirable.

Generally, the present subject matter provides composite components, and methods of forming composite components, having fluid pathways defined in a ply layup forming the composite component to promote densification of the ply layup. For instance, the fluid pathways are dimensionally larger in one or more dimensions than typical pores defined in composite matrix precursor materials. The fluid pathways of adjacent plies or layers can intersect to define a pathway for a densification fluid, such as the reactive gas of a chemical vapor infiltration process, to penetrate deeper within the ply layup than is usually achieved with the typical dimensionally smaller voids formed in the composite matrix precursor material. As such, the composite components and methods described herein have deeper, more complete densification by preventing pathways for the densification fluid from "choking off" or prematurely filling with solid material.

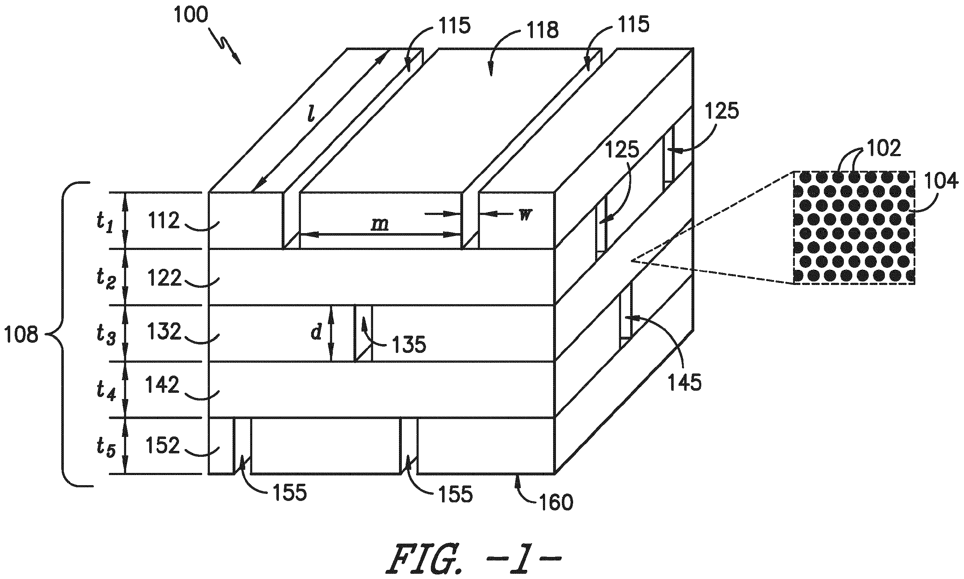

Referring now to the drawings, wherein identical numerals indicate the same elements throughout the figures, FIG. 1 is a schematic view of a composite component 100, e.g., by way of non-limiting example an airfoil (such as a fan blade, a compressor or turbine blade, a compressor or turbine nozzle), a shroud, a combustor liner, etc. of a gas turbine engine. In at least some embodiments, the gas turbine engine may be a turbofan jet engine including a fan section and a core turbine engine disposed downstream from the fan section. The core turbine engine generally includes a substantially tubular outer casing that encases, in serial flow relationship, a compressor section including a booster or low pressure (LP) compressor and a high pressure (HP) compressor; a combustion section; a turbine section including a high pressure (HP) turbine and a low pressure (LP) turbine; and a jet exhaust nozzle section. A high pressure (HP) shaft or spool drivingly connects the HP turbine to the HP compressor. A low pressure (LP) shaft or spool drivingly connects the LP turbine to the LP compressor. During operation of the turbofan jet engine, a volume of air passes across fan blades of a fan disposed in the fan section. A first portion of the air is directed or routed into a bypass airflow passage and a second portion of the air is directed or routed into the LP compressor. The ratio between the first portion of air and the second portion of air is commonly known as a bypass ratio.

The pressure of the second portion of air is increased as it is routed through the high pressure (HP) compressor and into the combustion section, where it is mixed with fuel and burned to provide combustion gases. The combustion gases are routed through the HP turbine where a portion of thermal and/or kinetic energy from the combustion gases is extracted via sequential stages of HP turbine stator vanes that are coupled to the outer casing of the core turbine engine and HP turbine rotor blades that are coupled to the HP shaft or spool, thus causing the HP shaft or spool to rotate, thereby supporting operation of the HP compressor. The combustion gases are then routed through the LP turbine, where a second portion of thermal and kinetic energy is extracted from the combustion gases via sequential stages of LP turbine stator vanes that are coupled to the outer casing of the core turbine engine and LP turbine rotor blades that are coupled to the LP shaft or spool, thus causing the LP shaft or spool to rotate, thereby supporting operation of the LP compressor and/or rotation of the fan. The combustion gases are subsequently routed through the jet exhaust nozzle section of the core turbine engine to provide propulsive thrust.

Simultaneously, the pressure of the first portion of air is substantially increased as the first portion of air is routed through the bypass airflow passage before it is exhausted from a fan nozzle exhaust section, also providing propulsive thrust. The HP turbine, the LP turbine, and the jet exhaust nozzle section at least partially define a hot gas path for routing the combustion gases through the core turbine engine.

In some embodiments, components of the gas turbine engine may comprise a composite material, such as a ceramic matrix composite (CMC) material, which has high temperature capability, or a polymer matrix composite (PMC) material. As used herein, CMC refers to a class of materials that include a reinforcing material (e.g., reinforcing fibers) surrounded by a ceramic matrix phase. Generally, the reinforcing fibers provide structural integrity to the ceramic matrix. Some examples of matrix materials of CMCs can include, but are not limited to, non-oxide silicon-based materials (e.g., silicon carbide, silicon nitride, or mixtures thereof), oxide ceramics (e.g., silicon oxycarbides, silicon oxynitrides, aluminum oxide ($Al_2O_3$), silicon dioxide ($SiO_2$), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) may also be included within the CMC matrix.

Some examples of reinforcing fibers of CMCs can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide ($Al_2O_3$), silicon dioxide ($SiO_2$), aluminosilicates such as mullite, or mixtures thereof), or mixtures thereof.

Generally, particular CMCs may be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs may be comprised of a matrix and reinforcing fibers comprising oxide-based materials such as aluminum oxide ($Al_2O_3$), silicon dioxide ($SiO_2$), aluminosilicates, and mixtures thereof. Aluminosilicates can include crystalline materials such as mullite ($3Al_2O_3 \cdot 2SiO_2$), as well as glassy aluminosilicates.

In certain embodiments, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, such as a cure or burn-out to yield a high char residue in the preform, and subsequent chemical processing, such as melt-infiltration with silicon, to arrive at a component formed of a CMC material having a desired chemical composition.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds, and other like components, that would benefit from the lighter-weight and higher temperature capability these materials can offer.

PMC materials are typically fabricated by impregnating a fabric or unidirectional tape with a resin (prepreg), followed by curing. Prior to impregnation, the fabric may be referred to as a "dry" fabric and typically comprises a stack of two or more fiber layers (plies). The fiber layers may be formed of a variety of materials, nonlimiting examples of which include carbon (e.g., graphite), glass (e.g., fiberglass), polymer (e.g., Kevlar®) fibers, and metal fibers. Fibrous reinforcement materials can be used in the form of relatively short chopped fibers, generally less than two inches in length, and more preferably less than one inch, or long continuous fibers, the latter of which are often used to produce a woven fabric or unidirectional tape. PMC materials can be produced by dispersing dry fibers into a mold, and then flowing matrix material around the reinforcement fibers, or by using prepreg. For example, multiple layers of prepreg may be stacked to the proper thickness and orientation for the part, and then the resin may be cured and solidified to render a fiber reinforced composite part. Resins for PMC matrix materials can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific examples of high performance thermoplastic resins that have been contemplated for use in aerospace applications include polyetheretherketone (PEEK), polyetherketoneketone (PEKK), polyetherimide (PEI), and polyphenylene sulfide (PPS). In contrast, once fully cured into a hard rigid solid, thermoset resins do not undergo significant softening when heated but, instead, thermally decompose when sufficiently heated. Notable examples of thermoset resins include epoxy, bismaleimide (BMI), and polyimide resins. Thus, generally, PMC materials include matrices that are thermoset or thermoplastic and reinforcements that include, but are not limited to, glass, graphite, aramid, or organic fiber of any length, size, or orientation or combination of these reinforcements, and are further understood to include, but are not limited to, being manufactured by injection molding, resin transfer molding, prepreg tape layup (hand or automated), pultrusion, or any other suitable method for manufacture of a reinforced polymer matrix composite structure or combination of these manufacturing methods.

It will be appreciated that, rather than a gas turbine engine component, the composite component 100 may be a composite component of another assembly or system utilizing composite components. In such embodiments, the composite component 100 may be a CMC component, a PMC component, or may be formed from any other suitable composite material.

As shown in the callout of FIG. 1, which callout depicts an enlarged view of a segment of the composite component 100, the composite component 100 comprises fiber tows 102 disposed in a matrix material 104. For instance, the composite component 100 is a CMC component having ceramic reinforcement fibers gathered into a plurality of unidirectional arrays of fiber tows 102, which are disposed in a ceramic matrix 104 as described herein. In other embodiments, the composite component 100 is a PMC component having reinforcement fibers (e.g., carbon, glass, and/or polymer fibers) gathered into a plurality of unidirectional arrays of fiber tows 102, which are disposed in a resin or other polymer matrix 104. Further, the material or medium forming the composite component 100 has a characteristic or average pore size. It will be appreciated that, as used herein, "unidirectional arrays of fiber tows" refers to arrays of bundles of reinforcement fibers in which the reinforcement fibers in the bundles substantially extend along a single direction.

As shown in FIGS. 1-3, the composite component 100 comprises a first ply 112 having a first plurality 114 of unidirectional arrays of fiber tows 102 extending in a first direction 116. Further, the first ply 112 has a first ply first surface 118 opposite a first ply second surface 120 and a first thickness $t_1$. The composite component 100 further comprises a second ply 122 having a second plurality 124 of unidirectional arrays of fiber tows 102 extending in a second direction 126. Moreover, the second ply 122 has a second ply first surface 128 opposite a second ply second surface 130 and a second thickness $t_2$.

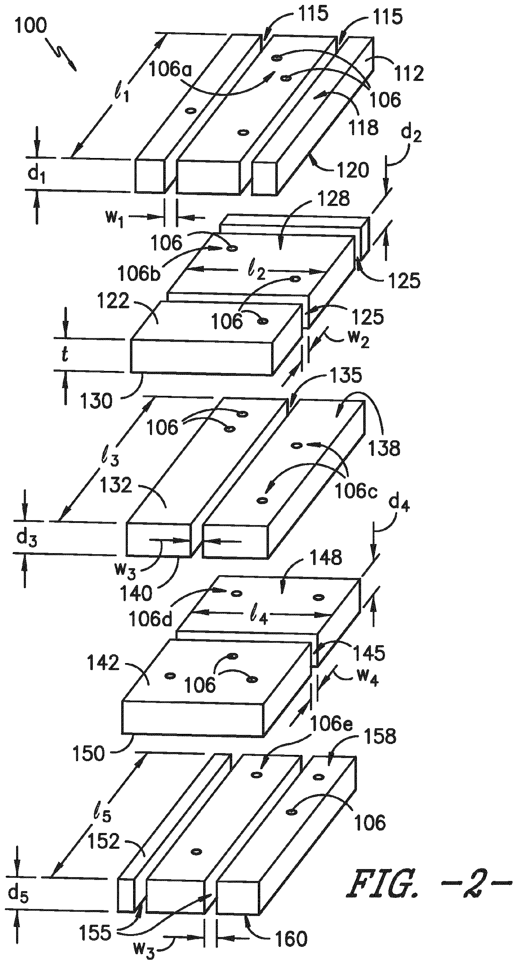

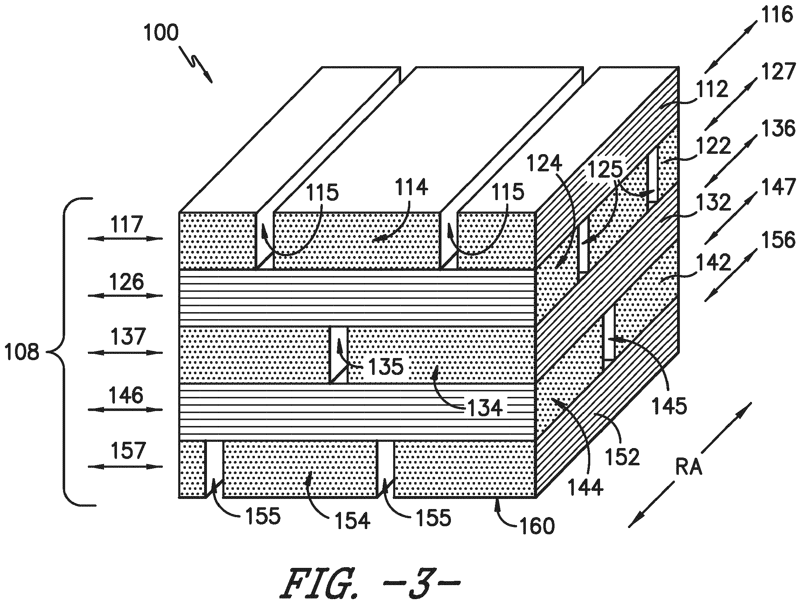

Referring particularly to FIG. 2, a first fluid pathway 115 is defined in the first ply 112. The first fluid pathway 115 has a first length $l_1$ in a first length direction, which is the first direction 116 (FIG. 3) in the depicted embodiment, and a first width $w_1$ in a first width direction 117 (FIG. 3) perpendicular or normal to the first length direction, i.e., the first direction 116 in the illustrated embodiment. The first length $l_1$ is greater than the first width $w_1$. Further, the first fluid pathway 115 comprises a first depth $d_1$ extending from the first ply first surface 118 to the first ply second surface 120, such that the first fluid pathway 115 extends through the entire thickness $t$ of the first ply 112 and the first depth $d_1$ is equal to the first ply thickness $t_1$. Moreover, the first length $l_1$ is greater than the first depth $d_1$. It will be appreciated that the first length direction need not be the same as the first direction 116, such that the first length $l_1$ of the first fluid pathway 115 need not extend parallel to the first plurality 114 (FIG. 3) of unidirectional arrays of fiber tows 102. Moreover, in some embodiments, the first width $w_1$ may vary along the first depth $d_1$ and/or the first length $l_1$, and in such embodiments, the first length $l_1$ may be greater than every value of the first width $w_1$. Further, in some embodiments, the first depth $d_1$ may vary along the first length $l_1$ and/or first width $w_1$, and in such embodiments, the first length $l_1$ may be greater than every value of the first depth $d_1$.

Similarly, a second fluid pathway 125 is defined in the second ply 122. The second fluid pathway 125 has a second length $l_2$ in a second length direction, which is the second direction 126 (FIG. 3) in the illustrated embodiment, and a second width $w_2$ in a second width direction 127 (FIG. 3) normal to the second length direction, i.e., the second direction 126 in the depicted embodiment. The second length $la$ is greater than the second width $w_2$. Further, the second fluid pathway 125 comprises a second depth $d_2$ extending from the second ply first surface 128 to the second ply second surface 130, such that the second fluid pathway 125 extends through the entire thickness $t$ of the second ply 122 and the second depth $d_2$ is equal to the second ply thickness $t_2$. Moreover, the second length $la$ is greater than the second depth $d_2$. Like the first length direction, it will be appreciated that the second length direction need not be the same as the second direction 126, such that the second length $la$ of the second fluid pathway 125 need not extend parallel to the second plurality 124 (FIG. 3) of unidirectional arrays of fiber tows 102. Further, in some embodiments, the second width $w_2$ may vary along the second depth $d_2$ and/or the second length $l_2$, and in such embodiments, the second length $la$ may be greater than every value of the second width $w_2$. Additionally, or alternatively, in some embodiments, the second depth $d_2$ may vary along the second length $la$ and/or second width $w_2$, and in such embodiments, the second length $la$ may be greater than every value of the second depth $d_2$.

As illustrated in FIGS. 1 and 3, the first ply 112 is stacked with the second ply 122 such that the first ply second surface 120 contacts the second ply first surface 128. Further, the first fluid pathway 115 intersects the second fluid pathway 125 to define a continuous fluid pathway from the first fluid pathway 115 to the second fluid pathway 125. As such, a densification fluid, such as a vapor or a molten or other liquid material as used in various densification processes described herein, may flow inward with respect to the composite component 100. For example, the densification fluid may flow from an outer surface of the composite component 100 defined by the first ply first surface 118, into the first fluid pathway 115, and through the continuous fluid pathway defined by the first fluid pathway 115 and the second fluid pathway 125 to penetrate the composite component 100 and fill the first and second fluid pathways 115, 125 with the densification fluid to densify the composite component 100. Generally, one or more additional plies (e.g., up to n number of composite plies) may be stacked with the first ply 112 and second ply 122 to form a ply stack or ply layup 108. Like the first ply 112 and second ply 122, each additional ply of the plurality of additional plies may have a plurality of unidirectional arrays of fiber tows 102. Further, each additional ply of the plurality of additional plies may define a plurality of fluid pathways, with each fluid pathway of the plurality of fluid pathways having a length $l$ greater than a width $w$. Each additional ply of the plurality of additional plies is consecutively stacked with the first ply 112 and the second ply 122 in the ply stack such that each ply is a layer in the ply stack and such that a respective fluid pathway of the plurality of fluid pathways in each layer is fluidly connected with at least one fluid pathway of the plurality of fluid pathways in each adjacent layer to form a continuous fluid pathway through the ply stack.

For instance, in the embodiment depicted in FIGS. 1-3, the composite component 100 further comprises a third ply 132, a fourth ply 142, and a fifth ply 152. The third ply 132 has a third plurality 134 of unidirectional arrays of fiber tows 102 extending in a third direction 126. Further, the third ply 132 has a third ply first surface 138 opposite a third ply second surface 140 and a third thickness $t_3$. The composite component 100 also comprises a fourth ply 142 having a fourth plurality 144 of unidirectional arrays of fiber tows 102 extending in a fourth direction 146. Moreover, the fourth ply 142 has a fourth ply first surface 148 opposite a fourth ply second surface 150 and a fourth thickness $t_4$. The composite component 100 further comprises a fifth ply 152 having a fifth plurality 154 of unidirectional arrays of fiber tows 102 extending in a fifth direction 156. Moreover, the fifth ply 152 has a fifth ply first surface 158 opposite a fifth ply second surface 160 and a fifth thickness $t_5$.

Like the first ply 112 and the second ply 122, each of the third ply 132, fourth ply 142, and fifth ply 152 defines a respective fluid pathway having a depth extending into the respective ply. For instance, a third fluid pathway 135 is defined in the third ply 132. The third fluid pathway 135 has a third length $l_3$ in a third length direction, which is the third direction 136 in the depicted embodiment, and a third width $w_3$ in a third width direction 137 normal to the third length direction, i.e., the third direction 136 as shown. The third length $l_3$ is greater than the third width $w_3$. Further, the third fluid pathway 135 comprises a third depth $d_3$ extending from the third ply first surface 138 to the third ply second surface 140, such that the third fluid pathway 135 extends through the entire thickness $t$ of the third ply 132 and the third depth $d_3$ is equal to the third ply thickness $t_3$. Moreover, the third length $l_3$ is greater than the third depth $d_3$. It will be appreciated that the third length direction need not be the same as the third direction 136, such that the third length $l_3$ of the third fluid pathway 135 need not extend parallel to the third plurality 134 of unidirectional arrays of fiber tows 102. Further, in some embodiments, the third width $w_3$ may vary along the third depth $d_3$ and/or the third length $l_3$, and in such embodiments, the third length $l_3$ may be greater than every value of the third width $w_3$. Additionally, or alternatively, in some embodiments, the third depth $d_3$ may vary along the third length $l_3$ and/or third width $w_3$, and in such embodiments, the third length $l_3$ may be greater than every value of the third depth $d_3$.

Likewise, a fourth fluid pathway 145 is defined in the fourth ply 142. The fourth fluid pathway 145 has a fourth length $l_4$ in a fourth length direction, which is the fourth direction 146 in the embodiment shown, and a fourth width $w_4$ in a fourth width direction 147 normal to the first length direction, i.e., the fourth direction 146 in the depicted embodiment. The fourth length $l_4$ is greater than the fourth width $w_4$. Further, the fourth fluid pathway 145 comprises a fourth depth $d_4$ extending from the fourth ply first surface 148 to the fourth ply second surface 150, such that the fourth fluid pathway 145 extends through the entire thickness $t$ of the fourth ply 142 and the fourth depth $d_4$ is equal to the fourth ply thickness $t_4$. Moreover, the fourth length $l_4$ is greater than the fourth depth $d_4$. It will be appreciated that the fourth length direction need not be the same as the fourth direction 146, such that the fourth length $l_4$ of the fourth fluid pathway 145 need not extend parallel to the fourth plurality 144 of unidirectional arrays of fiber tows 102. Further, in some embodiments, the fourth width $w_4$ may vary along the fourth depth $d_4$ and/or the fourth length $l_4$, and in such embodiments, the fourth length $l_4$ may be greater than every value of the fourth width $w_4$. Additionally, or alternatively, in some embodiments, the fourth depth $d_4$ may vary along the fourth length $l_4$ and/or fourth width $w_4$, and in such embodiments, the fourth length $l_4$ may be greater than every value of the fourth depth $d_4$.

Similarly, a fifth fluid pathway 155 is defined in the fifth ply 152. The fifth fluid pathway 155 has a fifth length $l_5$ in a fifth length direction, which is the fifth direction 156 in the illustrated embodiment, and a fifth width $w_5$ in a fifth width direction 157 normal to the fifth length direction, i.e., the fifth direction 156 in the embodiment shown. The fifth length $l_5$ is greater than the fifth width $w_5$. Further, the fifth fluid pathway 155 comprises a fifth depth $d_5$ extending from the fifth ply first surface 158 to the fifth ply second surface 160, such that the fifth fluid pathway 155 extends through the entire thickness $t$ of the fifth ply 152 and the fifth depth $d_5$ is equal to the fifth ply thickness $t_5$. Moreover, the fifth length $l_5$ is greater than the fifth depth $d_5$. It will be appreciated that the fifth length direction need not be the same as the fifth direction 156, such that the fifth length $l_5$ of the fifth fluid pathway 155 need not extend parallel to the fifth plurality 154 of unidirectional arrays of fiber tows 102. Additionally, or alternatively, in some embodiments, the fifth width $w_5$ may vary along the fifth depth $d_5$ and/or the fifth length $l_5$, and in such embodiments, the fifth length $l_5$ may be greater than every value of the fifth width $w_5$. Further, in some embodiments, the fifth depth $d_5$ may vary along the fifth length $l_5$ and/or fifth width $w_5$, and in such embodiments, the fifth length $l_5$ may be greater than every value of the fifth depth $d_5$.

As illustrated in FIGS. 1 and 3, the third ply 132 is stacked with the first ply 112 and the second ply 122 such that the second ply second surface 130 contacts the third ply first surface 138. Further, the third fluid pathway 135 intersects the second fluid pathway 125, which intersects the first fluid pathway 115 as described above, to define a continuous fluid pathway from the first fluid pathway 115 to the third fluid pathway 135. Moreover, the fourth ply 142 is stacked with the first ply 112, the second ply 122, and the third ply 132 such that the third ply second surface 140 contacts the fourth ply first surface 148. The fourth fluid pathway 145 intersects the third fluid pathway 135 to define a continuous fluid pathway from the first fluid pathway 115 to the fourth fluid pathway 145. Additionally, in the illustrated embodiment of FIGS. 1 and 3, the fifth ply 152 is stacked with the first ply 112, the second ply 122, the third ply 132, and the fourth ply 142 such that the fourth ply second surface 150 contacts the fifth ply first surface 158. Further, the fifth fluid pathway 155 intersects the fourth fluid pathway 145 to define a continuous fluid pathway from the first fluid pathway 115 to the fifth fluid pathway 155.

As such, a densification fluid, such as a vapor or a molten or other liquid material as used in various densification processes described herein, may flow inward with respect to the composite component 100. For example, the densification fluid may flow from an outer surface of the composite component 100 defined by the first ply first surface 118, into the first fluid pathway 115, and through the continuous fluid pathway defined by the first fluid pathway 115, the second fluid pathway 125, the third fluid pathway 135, the fourth fluid pathway 145, and the fifth fluid pathway 155 to penetrate the composite component 100 and fill the pathways 115, 125, 135, 145, 155 with the densification fluid to densify the composite component 100.

Moreover, as illustrated in FIGS. 1-3, one or more plies 112, 122, 132, 142, 152 may define more than one fluid pathway 115, 125, 135, 145, 155, which may allow additional penetration of the densification fluid to inner portions of the composite component 100. That is, additional fluid pathways 115, 125, 135, 145, 155, which extend from one ply 112, 122, 132, 142, 152 into an adjacent ply 112, 122, 132, 142, 152 to form a fluid pathway from the outer surface (i.e., first ply first surface 118) into the composite component 100 as described herein, provide more openings for the densification fluid to flow into the composite component 100.

As shown in FIGS. 1-3, the fluid pathways within a single layer or ply are spaced apart by a distance $m$. For example, the two first fluid pathways 115 defined in the first ply 112 are laterally spaced apart by a first distance $m$, and the two second fluid pathways 125 defined in the second ply 122 are laterally spaced apart by a second distance $m$, which may be the same as or different from the first distance $m$. For additional fluid pathways within a layer or ply, the additional fluid pathways may be spaced apart from adjacent fluid pathways by a distance $m$, and the distance $m$ may be the same for each spacing between fluid pathways within a layer or ply or at least one distance $m$, for a layer or ply having multiple fluid pathways spaced apart from one another, may be different for at least one spacing between fluid pathways of the layer or ply.

The distance $m$ between fluid pathways within a layer or ply may be within a range to provide effective reinforcement and infiltration. For instance, if the spacing between fluid pathways is too close, then the ply will have insufficient fiber to provide effective reinforcement, e.g., under high loads. However, if the fluid pathways are spaced too far apart, then there are insufficient pathways for infiltration of the densification fluid. The spacing between fluid pathways may be expressed as a ratio of the distance $m$ to the ply thickness $t$, and the ratio $m{:}t$ may be within a range of about 0.25:1 to about 10:1. That is, the lateral distance $m$ between fluid pathways of a single layer or ply may be within a range of about one-quarter (1/4) of the ply thickness $t$ to about ten (10) times the ply thickness $t$. In some embodiments, the ratio $m{:}t$ may be within a range of about 0.4:1 to about 7:1, and in some embodiments, the ratio $m{:}t$ may be within a range of about 0.5:1 to about 5:1.

Moreover, while the width w of each fluid pathway 115, 125, 135, 145, 155 need not be constant or the same, the width w of each fluid pathway 115, 125, 135, 145, 155 may be greater than the characteristic pore size of the medium from which the composite component 100 is formed. The characteristic pore size may be an average pore size of the medium excluding the fluid pathways 115, 125, 135, 145, 155 and may be a typical pore size at which sealing off occurs during infiltration. In some embodiments, the characteristic pore size may be within a range of about 1/20 of a fiber diameter of the medium to about a fiber-fiber edge distance of the medium corresponding to a minimum loading fraction, where the distance between fibers may be proportional to $\dfrac{1}{\sqrt{fiber\ volume\ fraction}}$. In some embodiments, the characteristic pore size may be within a range of about 0.5 microns to about 20 microns, in some embodiments within a range of about 1 micron to about 15 microns, and in some embodiments within a range of about 2 microns to about 10 microns.

Having a fluid pathway width w larger than the characteristic pore size helps ensure the porous medium is filled or infiltrated prior to sealing of the one or more fluid pathways 115, 125, 135, 145, 155. However, too large of a fluid pathway width w may lead to either longer infiltration processing times or excessive void formation in interior layers or plies due to incomplete filling of one or more fluid pathways. Excessive residual porosity from incomplete fluid pathway infiltration or densification can lead to a debit in the mechanical properties of the composite component 100. Accordingly, a characteristic or average width w of the fluid pathways, such as fluid pathways 115, 125, 135, 145, 155, of the composite component 100 may be within a range of about two (2) times to about twenty (20) times greater than the characteristic pore size of the medium. For example, a characteristic fluid pathway width w may be at least two times and up to ten (10) times the characteristic pore size of the medium forming the composite component 100.

Because the fluid pathways 115, 125, 135, 145, 155 are dimensionally larger than typical pores, the densification fluid can flow deeper into the composite component 100 without choking off or closing up the fluid pathways. With deeper penetration of the densification fluid, the composite component 100 upon densification has fewer pores or openings, which can increase the mechanical performance of the composite component 100 compared to composite components made using previous techniques, particularly for thicker components where penetration of the inner portions of the components could be hindered by choke-off of typically smaller pores.

It will be appreciated that the illustrated number of plies and the illustrated number, location, and relative size of fluid pathways are by way of example only. In various embodiments, the composite component 100 may include any number of plies, such as one, two, or more plies 112, 122, 132, 142, 152 as depicted in FIGS. 1-3, and each ply may have the same ply thickness $t$ or the thickness $t$ of at least one ply may vary from the thickness $t$ of one or more plies. Each ply may define any number of fluid pathways, such as one, two, or more fluid pathways 115, 125, 135, 145, 155. For instance, as shown in the portion of the composite component depicted in FIGS. 1-3, the first ply 112 defines two first fluid pathways 115, the second ply 122 defines two second fluid pathways 125, the third ply 132 defines one fluid pathway 135, the fourth ply 142 defines one fluid pathway 145, and the fifth ply 152 defines two fluid pathways 155, although different numbers of fluid pathways may be defined in a respective ply. Further, the location of each fluid pathway in the respective ply may vary from the configuration or locations shown in FIGS. 1-3, and while each depicted fluid pathway 115, 125, 135, 145, 155 is generally the same size (e.g., the length $l$, width $w$, and depth $d$ of each pathway 115, 125, 135, 145, 155 is generally equal), in other embodiments, one or more fluid pathways 115, 125, 135, 145, 155 may have a different dimension $l, w, d$ (either greater or smaller) than the same dimension of another fluid pathway 115, 125, 135, 145, 155.

Referring now to FIG. 3, the plies 112, 122, 132, 142, 152 may be laid up with the unidirectional arrays of fiber tows 102 extending in the same or different directions. For example, as illustrated in FIG. 3, the plies 112, 122, 132, 142, 152 are laid up with alternating plies having their fiber tows 102 extending in the same direction, which is a different direction than the remaining plies. More particularly, in the embodiment of FIG. 3, the second direction 126 is different from the first direction 116. Further, the first direction 116, third direction 136, and fifth direction 156 are all the same direction (which may be referred to as the first direction 116), while the second direction 126 is the same as the fourth direction 146 (which may be referred to as the second direction 126) but different from the first direction 116.

The different directions 116, 126 may be offset 90° from one another, e.g., in FIG. 3, the second direction 126 is offset 90° from the first direction 116. For instance, the alternating plies may be 0°/90°, where the unidirectional arrays of fiber tows 102 of a respective ply are at either 0° or 90° with respect to a reference axis RA of the composite component 100. As an example, the first ply 112, third ply 132, and fifth ply 152 may be 0° plies with the first plurality 114, third plurality 134, and fifth plurality 154 of unidirectional arrays of fiber tows 102 aligned with the reference axis RA, while the second ply 122 and fourth ply 142 may be 90° plies with the second plurality 124 and fourth plurality 144 of unidirectional arrays of fiber tows 102 extending normal to the reference axis RA. In other embodiments of a 90° offset between the first direction 116 and the second direction 126, the alternating plies may be 90°/0° plies, -45°/+45° plies, +45°/-45° plies, or at any other orientation where the first direction 116 and second direction 126 are separate by 90° from one another.

Of course, in other embodiments, the first direction 116 and the second direction 126 may be offset from one another by any angular measurement such that the first direction 116 and the second direction 126 are non-parallel. For example, the plies may be 30°/60° plies such that the first direction 116 is at a 30° angle with respect to the reference axis RA and the second direction 126 is at a 60° angle with respect to the reference axis RA. In still other embodiments, the plies may be laid up along two or more different directions, e.g., the third direction 136 and/or the fifth direction 156 may be different from the first direction 116 and/or the fourth direction 146 may be different from the second direction 126. For instance, each of the first direction 116, second direction 126, third direction 136, fourth direction 146, and fifth direction 156 may be different directions, or four of the five directions 116, 126, 136, 146, 156 may be different directions, or three of the five directions 116, 126, 136, 146, 156 may be different directions. Further, in some embodiments, two or more adjacent plies may be laid up such that their respective pluralities of unidirectional arrays of fiber tows 102 extend parallel to one another, e.g., adjacent plies (such as, e.g., the second ply 122 and the third ply 132) may have pluralities of unidirectional arrays of fiber tows 102 extending in the same direction (e.g., for the given example, the second direction 126 is the same as the third direction 136).

Referring back to FIG. 2, the composite plies 112, 122, 132, 142, 152 may define a plurality of pores 106 in addition to the fluid pathways 115, 125, 135, 145, 155. For example, the first ply 112 may define a first plurality 106a of pores 106, the second ply 122 may define a second plurality 106b of pores 106, the third ply 132 may define a third plurality 106c of pores 106, the fourth ply 142 may define a fourth plurality 106d of pores 106, and the fifth ply 152 may define a fifth plurality 106e of pores 106. When the composite plies 112, 122, 132, 142, 152 are laid up together, one or more pores 106 of the plurality of pores 106 may fluidly couple with a pore 106 or fluid pathway 115, 125, 135, 145, 155 of an adjacent composite ply 112, 122, 132, 142, 152; however, fluidic coupling between pores 106 or a pore 106 and a fluid pathway 115, 125, 135, 145, 155 does not form a continuous pathway for the densification fluid as described herein with respect to the fluidic coupling of the fluid pathways 115, 125, 135, 145, 155.

Each pore 106 of the first plurality 106a, the second plurality 106b, the third plurality 106c, the fourth plurality 106d, and the fifth plurality 106e of pores 106 106 is dimensionally smaller than both the first fluid pathway 115 and the second fluid pathway 125. For instance, the length $l_1$ of the first fluid pathway 115 and the length $l_2$ of the second fluid pathway 125 are each larger than the length or the dimension of each pore 106 extending in the same direction as the unidirectional array of fiber tows 102 of the respective ply 112, 122. As described herein, the composite component 100 has a characteristic or average pore size of the pores 106 that is smaller than a characteristic or average fluid pathway width $w$, e.g., the characteristic fluid pathway width w may be within a range of about two (2) times to about twenty (20) times greater than the characteristic pore size of the pores 106. Moreover, the depth $d$ of each fluid pathway 115, 125, 135, 145, 155 may be larger or deeper than a depth of a respective pore 106 defined in a respective ply 112, 122, 132, 142, 152.

Further, the pores 106 and the fluid pathways 115, 125, 135, 145, 155 are each voids or openings in the plies 112, 122, 132, 142, 152, with the pores 106 being dimensionally smaller than the fluid pathways 115, 125, 135, 145, 155 as described above. As such, the composite component 100 has a bimodal void size distribution. For example, prior to infiltrating a ply layup 108 comprising the plies 112, 122, 132, 142, 152 to densify the porous matrix material and form the composite component 100 as described herein, the plies 112, 122, 132, 142, 152 comprise the pluralities 114, 124, 134, 144, 154 (FIG. 3) of unidirectional arrays of fiber tows 102 and a matrix precursor, and in some embodiments, a pore former such as polymeric particles. After curing the plies 112, 122, 132, 142, 152 to pyrolyze the matrix precursor, and when included, burnout the pore former, the cured plies 112, 122, 132, 142, 152 comprise the unidirectional arrays of fiber tows 102 and a porous matrix skeleton having a bimodal void size distribution. As such, the voids in the ply layup 108, including the plurality 106a, 106b, 106c, 106d, 106e of pores 106 and the plurality of fluid pathways 115, 125, 135, 145, 155, have two clearly discernable maxima on a void size distribution curve.

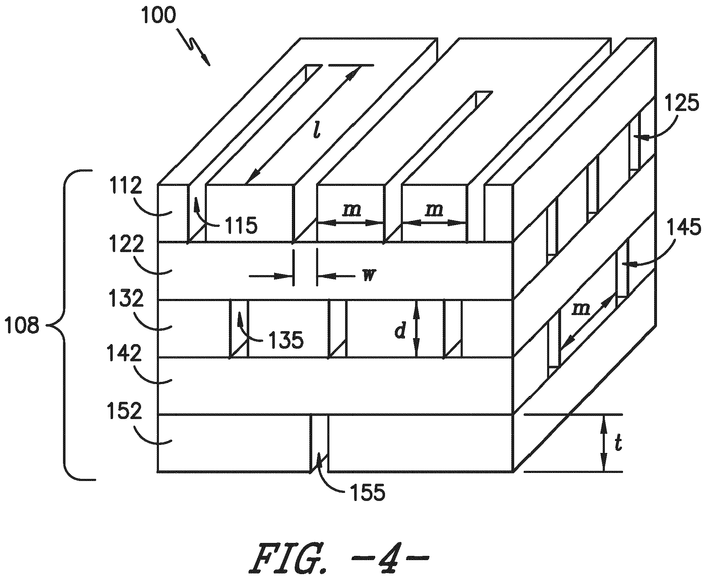

Turning now to FIG. 4, as described herein, the composite component 100 defines a plurality of fluid pathways 115, 125, 135, 145, 155 in the plurality of plies 112, 122, 132, 142, 152, which are laid up in a ply stack or layup 108 such that the plurality of plies 112, 122, 132, 142, 152 are a plurality of layers. In at least some embodiments, the number of fluid pathways 115, 125, 135, 145, 155 per unit area of a ply of the plurality of plies 112, 122, 132, 142, 152 can be optionally and alternatively arranged to decrease in number from a first ply 112 to another ply 152. In one non-limiting example, the first ply 112 can form an outermost layer of the composite component 100 and the other ply 152 can form an innermost layer of the composite component 100. However, this need not be the case. In the illustrated alternative example of FIG. 4, the composite component 100 has a gradient of voids or porosity with respect to the fluid pathways 115, 125, 135, 145, 155, the gradient decreasing inward from the outer surface of the composite component defined by the first ply first surface 118 to the fifth ply 152. In some embodiments, the number of fluid pathways 115, 125, 135, 145, 155 per unit area decreases monotonically inward from the outermost layer or ply 112 to the innermost layer or ply 152.

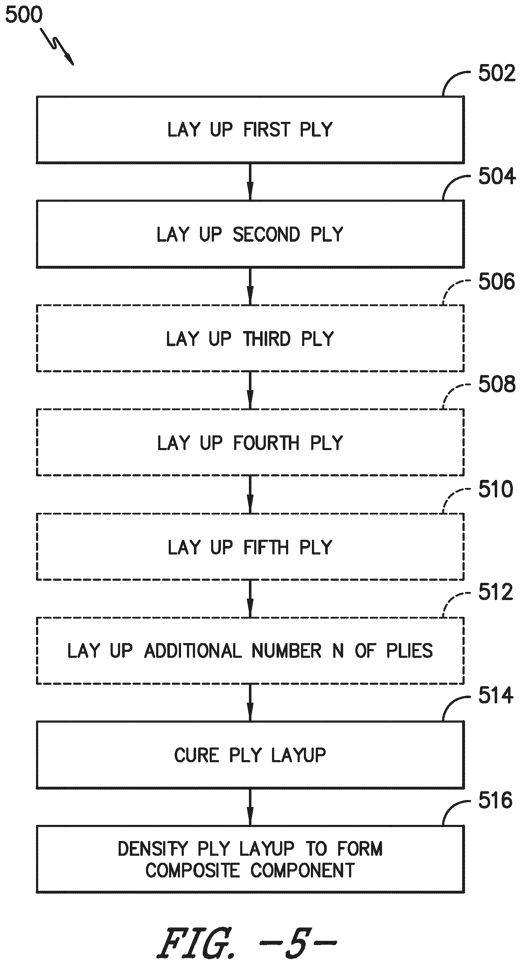

FIG. 5 provides a flow diagram of a method 500 of forming a composite component 100. The method 500 includes (502) laying up a first ply 112 and (504) laying up a second ply 122 in contact with the first ply 112 to form a ply layup 108. The first ply 112 and the second ply 122 are each configured as described herein. For instance, as shown in FIGS. 1 and 3, the first ply 112 includes a first plurality 114 of unidirectional arrays of fiber tows 102 extending in a first direction 116. A first fluid pathway 115 is defined in the first ply 112, which has a first ply first surface 118 opposite a first ply second surface 120 and a first ply thickness $t_1$. The first fluid pathway 115 has a first length $l_1$ in the first direction 116, a first width $w_1$ in a first width direction 117 normal to the first direction 116, and a first depth $d_1$ extending from the first ply first surface 118 to the first ply second surface 120. The first length $l_1$ is greater than both the first width $w_1$ and the first depth $d_1$. In at least some embodiments, where the first width $w_1$ varies along the first depth $d_1$ and/or the first length $l_1$, the first length $l_1$ is greater than every value of the first width $w_1$, and where the first depth $d_1$ varies along the first length $l_1$ and/or the first width $w_1$, the first length $l_1$ is greater than every value of the first depth $d_1$.

Similarly, as described above, the second ply 122 includes a second plurality 124 of unidirectional arrays of fiber tows 102 extending in a second direction 126. A second fluid pathway 125 is defined in the second ply 122, which has a second ply first surface 128 opposite a second ply second surface 130 and a second ply thickness $t_2$. The second fluid pathway 125 has a second length $la$ in the second direction 126, a second width $w_2$ in a second width direction 127 normal to the second direction 126, and a second depth $d_2$ extending from the second ply first surface 128 inward toward the second ply second surface 130. In exemplary embodiments, the second depth $d_2$ extends from the second ply first surface 128 to the second ply second surface 130. The second length $la$ is greater than both the second width $w_2$ and the second depth $d_2$. In at least some embodiments, where the second width $w_2$ varies along the second depth $d_2$, the second length $la$ is greater than every value of the second width $w_2$, and where the second depth $d_2$ varies along the second direction 126, the second length $la$ is greater than every value of the second depth $d_2$.

In at least some embodiments, the method 500 also comprises (506) laying up a third ply 132 in contact with the second ply 122 such that the ply layup 108 includes the third ply 132. The method 500 may further comprise (508) laying up a fourth ply 142 in contact with the third ply 132 such that the ply layup 108 includes the fourth ply 142. In some embodiments, the method 500 also includes (510) laying up a fifth ply 152 in contact with the fourth ply 142 such that the ply layup 108 includes the fifth ply 152. The method 500 can include (512) laying up any additional number n of composite plies to define a ply layup 108 for the composite component 100.

The third ply 132, the fourth ply 142, and the fifth ply 152 may be configured as described herein. For example, the third ply 132 includes a third plurality 134 of unidirectional arrays of fiber tows 102 extending in a third direction 136. A third fluid pathway 135 is defined in the third ply 132, which has a third ply first surface 138 opposite a third ply second surface 140 and a third ply thickness $t_3$. The third fluid pathway 135 has a third length $l_3$ in the third direction 136, a third width $w_3$ in a third width direction 137 normal to the third direction 136, and a third depth $d_3$ extending from the third ply first surface 138 to the third ply second surface 140. The third length $l_3$ is greater than both the third width $w_3$ and the third depth $d_3$. Likewise, as described above, the fourth ply 142 includes a fourth plurality 144 of unidirectional arrays of fiber tows 102 extending in a fourth direction 146. A fourth fluid pathway 145 is defined in the fourth ply 142, which has a fourth ply first surface 148 opposite a fourth ply second surface 150 and a fourth ply thickness $t_4$. The fourth fluid pathway 145 has a fourth length $l_4$ in the fourth direction 146, a fourth width $w_4$ in a fourth width direction 147 normal to the fourth direction 146, and a fourth depth $d_4$ extending from the fourth ply first surface 148 to the fourth ply second surface 150. The fourth length $l_4$ is greater than both the fourth width $w_4$ and the fourth depth $d_4$. Similarly, as described

above, the fifth ply 152 includes a fifth plurality 154 of unidirectional arrays of fiber tows 102 extending in a fifth direction 156. A fifth fluid pathway 155 is defined in the fifth ply 152, which has a fifth ply first surface 158 opposite a fifth ply second surface 160 and a fifth ply thickness $t_5$. The fifth fluid pathway 155 has a fifth length $l_5$ in the fifth direction 156, a fifth width $w_5$ in a fifth width direction 157 normal to the fifth direction 156, and a fifth depth $d_5$ extending from the fifth ply first surface 158 inward toward the fifth ply second surface 160. In exemplary embodiments, the fifth depth $d_5$ extends from the fifth ply first surface 158 to the fifth ply second surface 160. The fifth length $l_5$ is greater than both the fifth width $w_5$ and the fifth depth $d_5$.

It will be appreciated that additional plies in the ply layup 108 may be configured similar to the first ply 112, second ply 122, third ply 132, fourth ply 142, and fifth ply 152. Further, the first ply 112, second ply 122, third ply 132, fourth ply 142, and fifth ply 152 may include additional features as described above. For instance, each ply 112, 122, 132, 142, 152 defines any number of fluid pathways 115, 125, 135, 145, 155, with each fluid pathway defined within a single ply laterally spaced apart by a distance $m$, which may be the same or may vary between fluid pathways. As described herein, the ratio of the lateral distance $m$ between fluid pathways of a ply 112, 122, 132, 142, 152 and the thickness $t$ of the respective ply 112, 122, 132, 142, 152 may be within a range of about 0.25:1 to about 10:1. In some embodiments, the ratio $m:t$ may be within a range of about 0.4:1 to about 7:1, and in some embodiments, the ratio $m:t$ may be within a range of about 0.5:1 to about 5:1.

Moreover, each ply 112, 122, 132, 142, 152 may include a plurality 106a, 106b, 106c, 106d, 106e of pores 106 (FIG. 2), which are voids or openings in the respective ply like the fluid pathways 115, 125, 135, 145, 155 but are dimensionally smaller than each fluid pathway 115, 125, 135, 145, 155. That is, the composite component 100 may have a characteristic pore size of pores 106, with a characteristic fluid pathway width w within a range of about two (2) times to about twenty (20) times greater than the characteristic pore size. As such, the ply layup 108 may include a bimodal distribution of void sizes.

Further, laying up the respective plies 112, 122, 132, 142, 152 may comprise aligning the unidirectional arrays of fiber tows 102 within each ply along a given direction with respect to a reference axis RA of the composite component 100. Referring to FIG. 3, by way of example only, the first ply 112, third ply 132, and fifth ply 152 may be laid up such that the first plurality 114, third plurality 134, and fifth plurality 154 of unidirectional arrays of fibers tows 102 extend along the first direction 116, and the second ply 122 and the fourth ply 142 may be laid up such that the second plurality 124 and fourth plurality 144 of unidirectional arrays of fiber tows 102 extend along the second direction 126. The second direction 126 is different from the first direction 116 such that, e.g., laying up the second ply 122 in contact with the first ply 112 comprises laying up the second ply 122 such that the second plurality 124 of unidirectional arrays of fiber tows 102 are offset from the first plurality 114 of unidirectional arrays of fiber tows 102. As described herein, in some embodiments, the second direction 126 is offset 90° from the first direction 116, such that alternating plies may be in a 0°/90°, +45°/-45°, -45°/+45°, etc. configuration with respect to the reference axis RA of the composite component 100. In other embodiments, the offset between the first and second directions 116, 126 may be a different angular measurement with respect to the reference axis RA, and/or two or more plies in the ply layup 108 may laid up such that the unidirectional arrays of fiber tows 102 extend along the same direction and are parallel to one another.

As further described herein, when the plies 112, 122, 132, 142, 152 are laid up in the ply layup 108, the first fluid pathway 115 intersects the second fluid pathway 125 to define a continuous fluid pathway from the first fluid pathway 115 to at least the second fluid pathway 125. Further, the third fluid pathway 135 intersects the second fluid pathway 125 to define the continuous fluid pathway from the first fluid pathway 115 to at least the third fluid pathway 135. Additionally, the fourth fluid pathway 145 intersects the third fluid pathway 135 to define the continuous fluid pathway from the first fluid pathway 115 to at least the fourth fluid pathway 145. Moreover, the fifth fluid pathway 155 intersects the fourth fluid pathway 145 to define the continuous fluid pathway from the first fluid pathway 115 to at least the fifth fluid pathway 155.

In at least some embodiments, the method 500 further includes (514) curing the ply layup 108. In some embodiments, curing the ply layup 108 includes compacting the ply layup 108, which additionally may include autoclaving the ply layup 108. Additionally, or alternatively, curing the ply layup 108 may include firing or burning out the ply layup 108. During burnout, the ply layup 108 may be heated or fired in a vacuum or inert atmosphere to decompose any binders and remove any solvents in, e.g., the precursor ceramic matrix material and convert the precursor ceramic matrix material to the desired ceramic matrix material.

It will be appreciated that, in some embodiments, compaction and/or burnout may not be needed or may be omitted. For example, where the composite component 100 is formed from a polymer matrix composite (PMC) material, the PMC ply layup does not include the fillers, solvents, etc. that need to be burned out, and the PMC ply layup could not withstand the temperatures of burnout such that the burnout process can be omitted. As such, for some composite components 100, (514) curing the ply layup 108 does not include compaction, autoclaving, and/or firing/burnout.

Referring still to FIG. 5, the method 500 also includes (516) densifying the ply layup 108. In at least some embodiments, the ply layup 108 is densified using chemical vapor infiltration (CVI), but in other embodiments, other densification methods such as melt infiltration (MI) or the like may be used. Due to decomposition of the binders or other materials (such as a pore former) during the curing process, e.g., during burnout, the ply layup 108 is porous or has voids or openings therein, including the pores 106 and the fluid pathways 115, 125, 135, 145, 155. For instance, during burnout of a CMC ply layup 108, the matrix material 104 in each ply 112, 122, 132, 142, 152 shrinks, and the fiber tows 102 provide a volumetric constraint such that the fluid pathways 115, 125, 135, 145, 155 open up through shrinkage of the matrix material 104. Accordingly, the ply layup 108 may undergo densification, e.g., chemical vapor infiltration (CVI), melt infiltration (MI), or polymer infiltration and pyrolysis (PIP), to fill the porosity, voids, or openings and yield a densified CMC component 100.

Specific processing techniques and parameters for densification can depend on the particular composition of the materials. In exemplary embodiments, (516) densifying the ply layup 108 includes using a CVI process, whereby a matrix material is infiltrated into a fibrous preform by the use of reactive gases at elevated temperature to form the fiber-reinforced composite, such that the reactive gases are the densification fluid. CVI composite matrices typically have no free silicon phase and, thus, have good creep resistance and the potential to operate at temperatures above about 2,570°F. CVI may be used, e.g., for carbon fiber reinforced silicon carbide matrix (C/SiC) CMCs, SiC/SiC CMCs, etc.

The ply layup 108 may be densified using the CVI process alone or using a combination of a partial CVI followed by MI with silicon (Si), a silicon alloy, or an oxide, such as rare-earth disilicates ($RE_2Si_2O_7$), or using slurry infiltration prior to MI. Other densification techniques include, but are not limited to, silicon MI processes and reactive MI processes (e.g., where silicon carbide CMC components are infiltrated with molten silicon, such that molten silicon is the densification fluid), PIP processes (e.g., where silicon carbide reinforcement material components are infiltrated with a preceramic polymer, such as polysilazane, and then heat treated to form a SiC matrix, such that the preceramic polymer is the densification fluid) and oxide/oxide processes (e.g., for aluminum or alumino-silicate reinforcement material components), which each may be used alone or in combination with one or more other densification processes.

## Example

Three different seven-layer preforms E1, CE1, and CE2 were prepared, densified using chemical vapor infiltration (CVI), and examined in detail. The typical thickness $t$ of each layer or ply of the three preforms was about 190 microns. For each preform, there was an alternation in the ply orientation of 0° and 90° between adjacent plies. The first preform E1 conforms to the specifications of the subject matter described herein and was prepared according to the method 500 described with respect to FIG. 5 (although with seven plies rather than five plies as described with respect to method 500). The second preform CE1 was prepared with fugitive fibers; the fugitive fibers left large nearly circular trench-like voids in the second preform CE1 that extended nearly through a given layer of the second preform CE1. The large voids of the second preform CE1 remained mostly unfilled during the subsequent densification with CVI. The third preform CE2 was prepared in a manner different from the methods described herein, and the third preform CE2 did not exhibit the fluid pathway structures of the present subject matter in all the layers. As such, the three preforms E1, CE1, and CE2 had different values of porosity, as well as different shapes and dimensions of pores.

Following CVI, the samples were cut or sectioned and interlaminar tensile (ILT) strength measured. A small section of the sample was polished and examined using an optical microscope. From these measurements were obtained the fractional volume of fibers, the average separation of the fibers, the pore width (including both the CVI filled or infiltrated sections and residual unfilled or uninfiltrated sections), the typical pore depth, the typical fiber diameter, and the volume percent of the pores. The results of the analysis are given in Table 1.

Table 1: Results of Analysis of Samples E1, CE1, and CE2

|  | E1 | CE1 | CE2 |
| --- | --- | --- | --- |
| Net fiber loading | 0.225 | 0.136 | 0.257 |
| Average fiber distance (microns) | 5 | 3 | 4 |
| Typical fluid pathway width (microns) | 18 | 220 | N/A |
| Typical fluid pathway depth (microns) | 190 | 180 | N/A |
| Typical distance between fluid pathways (microns) | 430 | 1380 | N/A |
| Fiber diameter (microns) | 11 | 12 | 11 |
| ILT (ksi) | 11.7 | 5.6 | 4.9 |
| % porosity | 4.6 | 15.3 | 8.8 |

Given an already infiltrated preform, it is difficult to directly measure the characteristic pore length scale prior to the densification process. The fiber-fiber separation forms an upper estimate. The actual value of the characteristic pore size is reduced from the value of the fiber-fiber separation due to the presence of both fillers and char. Observation of the thickness of deposits from the CVI process on residual pores located between the fluid pathways in preform E1 suggests that the characteristic pore size is about one half (½) the fiber-fiber separation, which yields a range of the ratio of fluid pathway width to pore size in the range of 3.6:1 to 7.2:1. Further, in preform E1, the typical separation between the fluid pathways is about 430 microns, with the separation varying between 320 microns and 650 microns in the seven layer stack. Moreover, the preform E1, has as lower observed post-densification porosity and a higher value of ILT relative to preform CE1 and preform CE2.

Accordingly, as described herein, the present subject matter provides composite components and methods of forming composite components where fluid pathways in the layers of the composite components allow a densification fluid, such as a gas or vapor or a molten ceramic material, to access to the layers below the outermost layer. Prior to infiltration, the space between the fluid pathways can comprise fibers, filler and binder materials, and pores or other void space. Typically, the dimensions of the pores or void space in the fiber-containing region are much smaller than the typical width of the fluid pathways, and as the pores or void spaces are filled by infiltration, infiltration pathways formed by the pores or void space "choke-off." The dimensionally larger structure of the fluid pathways allows for deeper penetration or infiltration of the densification fluid, e.g., the reactive gas, into the preform or ply layup while structural strength is provided by the fiber-containing composite material between the fluid pathways. In the final stages of infiltration processing, the fluid pathways in the outermost plies are filled with the solid material created by the densification fluid. Therefore, more complete densification can be achieved for the composite component with fluid pathways as described herein compared to composite components having only pores or smaller void spaces. As such, thicker components densified using, e.g., a CVI process can have the same level of mechanical performance as thinner parts made with a unidirectional ply structure and densified using a CVI process. Thus, a greater variety of, e.g., high temperature gas turbine engine components may be made without resort to hybrid or specialized cooling structures to cool the components. Other advantages of the subject matter described herein also may be realized by those of ordinary skill in the art.

Further aspects of the disclosure are provided by the subject matter of the following clauses:

A composite component, comprising a first ply having a first plurality of unidirectional arrays of fiber tows extending in a first direction; a second ply having a second plurality of unidirectional arrays of fiber tows extending in a second direction; a first fluid pathway defined in the first ply, the first fluid pathway having a first length in a first length direction and a first width in a first width direction normal to the first length direction, the first length greater than the first width; and a second fluid pathway defined in the second ply, the second fluid pathway having a second length in a second length direction and a second width in a second width direction normal to the second length direction, the second length greater than the second width.

The composite component of any preceding clause, wherein the first ply has a first ply first surface opposite a first ply second surface and the second ply has a second ply first surface opposite a second ply second surface, wherein the first fluid pathway comprises a first depth extending from the first ply first surface to the first ply second surface, the first length greater than the first depth, and wherein the second fluid pathway comprises a second depth extending inward from the second ply first surface, the second length greater than the second depth.

The composite component of any preceding clause, wherein the first ply is stacked with the second ply such that the first ply second surface contacts the second ply first surface, and wherein the first fluid pathway intersects the second fluid pathway to define a continuous fluid pathway from the first fluid pathway to the second fluid pathway.

The composite component of any preceding clause, wherein the second direction is different from the first direction.

The composite component of any preceding clause, wherein the second direction is offset 90° from the first direction.

The composite component of any preceding clause, further comprising a third ply having a third plurality of unidirectional arrays of fiber tows extending in a third direction; and a third fluid pathway defined in the third ply, the third fluid pathway having a third length in a third length direction and a third width in a third width direction normal to the third length direction, the third length greater than the third width.

The composite component of any preceding clause, wherein the second depth extends from the second ply first surface to the second ply second surface, wherein the third ply has a third ply first surface opposite a third ply second surface, and wherein the third fluid pathway comprises a third depth extending inward from the third ply first surface, the third length greater than the third depth.

The composite component of any preceding clause, wherein the first ply, second ply, and third ply are stacked together such that the first ply second surface contacts the second ply first surface and the second ply second surface contacts the third ply first surface, wherein the first fluid pathway intersects the second fluid pathway to define a first continuous fluid pathway from the first fluid pathway to the second fluid pathway, and wherein the second fluid pathway intersects the third fluid pathway to define a second continuous fluid pathway from the second fluid pathway to the third fluid pathway.

The composite component of any preceding clause, wherein the second direction is different from the first direction.

The composite component of any preceding clause, wherein the third direction is the same as the first direction.

The composite component of any preceding clause, wherein the third direction is different from the second direction.

The composite component of any preceding clause, wherein the first ply, the second ply, and the third ply are laid up in a ply stack having an outermost layer and an innermost layer, wherein a plurality of fluid pathways are defined in each of the first ply, the second ply, and the third ply, and wherein the fluid pathways of the plurality of fluid pathways per unit area of a ply of the plurality of plies decreases in number from the outermost layer to the innermost layer.

The composite component of any preceding clause, further comprising a fourth ply having a fourth plurality of unidirectional arrays of fiber tows extending in a fourth direction; and a fourth fluid pathway defined in the fourth ply, the fourth fluid pathway having a fourth length in a fourth length direction and a fourth width in a fourth width direction normal to the fourth length direction, the fourth length greater than the fourth width.

The composite component of any preceding clause, wherein the third depth extends from the third ply first surface to the third ply second surface, wherein the fourth ply has a fourth ply first surface opposite a fourth ply second surface, and wherein the fourth fluid pathway comprises a fourth depth extending inward from the fourth ply first surface, the fourth length greater than the fourth depth.

The composite component of any preceding clause, wherein the first ply, second ply, third ply, and fourth ply are stacked together such that the first ply second surface contacts the second ply first surface, the second ply second surface contacts the third ply first surface, and the third ply second surface contacts the fourth ply first surface.

The composite component of any preceding clause, wherein the first fluid pathway intersects the second fluid pathway to define a first continuous fluid pathway from the first fluid pathway to the second fluid pathway, wherein the second fluid pathway intersects the third fluid pathway to define a second continuous fluid pathway from the second fluid pathway to the third fluid pathway, and wherein the third fluid pathway intersects the fourth fluid pathway to define a third continuous fluid pathway from the third fluid pathway to the fourth fluid pathway.

The composite component of any preceding clause, wherein the first fluid pathway intersects the second fluid pathway, the second fluid pathway intersects the third fluid pathway, and the third fluid pathway intersects the fourth fluid pathway to define a continuous fluid pathway from the first fluid pathway to the fourth fluid pathway.

The composite component of any preceding clause, wherein the continuous fluid pathway comprises the first continuous fluid pathway, the second continuous fluid pathway, and the third continuous fluid pathway.

The composite component of any preceding clause, wherein the fourth direction is the same as the second direction.

The composite component of any preceding clause, wherein the fourth direction is different from the first direction.

The composite component of any preceding clause, further comprising a fifth ply having a fifth plurality of unidirectional arrays of fiber tows extending in a fifth direction; and a fifth fluid pathway defined in the fifth ply, the fifth fluid pathway having a fifth length in a fifth length direction and a fifth width in a fifth width direction normal to the fifth length direction, the fifth length greater than the fifth width.

The composite component of any preceding clause, wherein the fourth depth extends from the fourth ply first surface to the fourth ply second surface, wherein the fifth ply has a fifth ply first surface opposite a fifth ply second surface, and wherein the fifth fluid pathway comprises a fifth depth extending inward from the fifth ply first surface, the fifth length greater than the fourth depth.

The composite component of any preceding clause, wherein the first ply, second ply, third ply, fourth ply, and fifth ply are stacked together such that the first ply second surface contacts the second ply first surface, the second ply second surface contacts the third ply first surface, the third ply second surface contacts the fourth ply first surface, and the fourth ply second surface contacts the fifth ply first surface.

The composite component of any preceding clause, wherein the first fluid pathway intersects the second fluid pathway to define a first continuous fluid pathway from the first fluid pathway to the second fluid pathway, wherein the second fluid pathway intersects the third fluid pathway to define a second continuous fluid pathway from the second fluid pathway to the third fluid pathway, wherein the third fluid pathway intersects the fourth fluid pathway to define a third continuous fluid pathway from the third fluid pathway to the fourth fluid pathway, and wherein the fourth fluid pathway intersects the fifth fluid pathway to define a fourth continuous fluid pathway from the fourth fluid pathway to the fifth fluid pathway.

The composite component of any preceding clause, wherein the first fluid pathway intersects the second fluid pathway, the second fluid pathway intersects the third fluid pathway, the third fluid pathway intersects the fourth fluid pathway, and the fourth fluid pathway intersects the fifth fluid pathway to define a continuous fluid pathway from the first fluid pathway to the fifth fluid pathway.

The composite component of any preceding clause, wherein the continuous fluid pathway comprises the first continuous fluid pathway, the second continuous fluid pathway, the third continuous fluid pathway, and the fourth continuous fluid pathway.

The composite component of any preceding clause, wherein the fifth direction is the same as the first direction.

The composite component of any preceding clause, wherein the fifth direction is different from the second direction.

The composite component of any preceding clause, wherein the first ply has a first ply thickness $t_1$ and defines a plurality of first fluid pathways, wherein the plurality of first fluid pathways are laterally spaced apart from one another by a distance $m$, and wherein a ratio of the distance $m$ to the first ply thickness $t_1$ is within a range of about 0.25:1 to about 10:1.

The composite component of any preceding clause, wherein the ratio of the distance $m$ to the first ply thickness $t_1$ is within a range of about 0.4:1 to about 7:1.

The composite component of any preceding clause, wherein the ratio of the distance $m$ to the first ply thickness $t_1$ is within a range of about 0.5:1 to about 5:1.

The composite component of any preceding clause, wherein at least one of the first ply, the second ply, the third ply, the fourth ply, or the fifth ply has a ply thickness $t$ and defines a plurality of fluid pathways, wherein the plurality of fluid pathways are laterally spaced apart from one another by a distance $m$, and wherein a ratio of the distance $m$ to the ply thickness $t$ is within a range of about 0.25:1 to about 10:1.

The composite component of any preceding clause, wherein the ratio of the distance $m$ to the ply thickness $t$ is within a range of about 0.4:1 to about 7:1.

The composite component of any preceding clause, wherein the ratio of the distance $m$ to the ply thickness $t$ is within a range of about 0.5:1 to about 5:1.

The composite component of any preceding clause, further comprising a first plurality of pores defined in the first ply and a second plurality of pores defined in the second ply.

The composite component of any preceding clause, wherein each pore of the first plurality of pores and each pore of the second plurality of pores is dimensionally smaller than both the first fluid pathway and the second fluid pathway.

The composite component of any preceding clause, wherein the first plurality of pores, the second plurality of pores, the first fluid pathway, and the second fluid pathway are each voids in the composite component, and wherein the composite component has a bimodal distribution of void sizes.

The composite component of any preceding clause, wherein the composite component has a characteristic pore size, and wherein each of the first width and the second width are greater than the characteristic pore size.

The composite component of any preceding clause, wherein each of the first width and the second width are within a range of about two times greater to about twenty times greater than the characteristic pore size.

The composite component of any preceding clause, wherein each of the first width and the second width are within a range of about two times greater to about ten times greater than the characteristic pore size.

The composite component of any preceding clause, wherein the composite component has a characteristic pore size, and wherein each of the first width, the second width, the third width, the fourth width, and the fifth width are greater than the characteristic pore size.

The composite component of any preceding clause, wherein each of the first width, the second width, the third width, the fourth width, and the fifth width are within a range of about two times greater to about twenty times greater than the characteristic pore size.

The composite component of any preceding clause, wherein each of the first width, the second width, the third width, the fourth width, and the fifth width are within a range of about two times greater to about ten times greater than the characteristic pore size.

The composite component of any preceding clause, wherein the characteristic pore size is within a range of about 0.5 microns to about 20 microns.

The composite component of any preceding clause, wherein the characteristic pore size is within a range of about 1 micron to about 15 microns.

The composite component of any preceding clause, wherein the characteristic pore size is within a range of about 2 microns to about 10 microns.

The composite component of any preceding clause, wherein the composite component is a ceramic matrix composite component.

The composite component of any preceding clause, wherein the composite component is configured for densification using a chemical vapor infiltration process.

A method of forming a composite component, comprising laying up a first ply having a first plurality of unidirectional arrays of fiber tows extending in a first direction; laying up a second ply in contact with the first ply to form a ply layup, the second ply having a second plurality of unidirectional arrays of fiber tows extending in a second direction; curing the ply layup to form at least one first fluid pathway in the first ply and at least one second fluid pathway in the second ply; and densifying the ply layup using chemical vapor infiltration, wherein the at least one first fluid pathway intersects the at least one second fluid pathway to define a continuous fluid pathway from the at least one first fluid pathway to the at least one second fluid pathway.

The method of any preceding clause, further comprising laying up a third ply in contact with the second ply such that the third ply is part of the ply layup, the third ply having a third plurality of unidirectional arrays of fiber tows extending in a third direction, wherein curing the ply layup forms at least one third fluid pathway in the third ply, wherein the at least one third fluid pathway intersects the at least one second fluid pathway to define a continuous fluid pathway from the at least one first fluid pathway to the at least one third fluid pathway.

The method of any preceding clause, wherein the second direction is different from the first direction such that laying up the second ply in contact with the first ply comprises laying up the second ply such that the second plurality of unidirectional arrays of fiber tows are offset from the first plurality of unidirectional arrays of fiber tows.

The method of any preceding clause, wherein the third direction is the same as the first direction.

The method of any preceding clause, further comprising laying up a fourth ply in contact with the third ply such that the fourth ply is part of the ply layup, the fourth ply having a fourth plurality of unidirectional arrays of fiber tows extending in a fourth direction, wherein curing the ply layup forms at least one fourth fluid pathway in the fourth ply, wherein the at least one fourth fluid pathway intersects the at least one third fluid pathway to define a continuous fluid pathway from the at least one first fluid pathway to the at least one fourth fluid pathway.

The method of any preceding clause, wherein the fourth direction is the same as the second direction.

The method of any preceding clause, further comprising laying up a fifth ply in contact with the fourth ply such that the fifth ply is part of the ply layup, the fifth ply having a fifth plurality of unidirectional arrays of fiber tows extending in a fifth direction, wherein curing the ply layup forms at least one fifth fluid pathway in the fifth ply, wherein the at least one fifth fluid pathway intersects the at least one fourth fluid pathway to define a continuous fluid pathway from the at least one first fluid pathway to the at least one fifth fluid pathway.

The method of any preceding clause, wherein the fifth direction is the same as the first direction.

The method of any preceding clause, wherein the first ply comprises a plurality of first fluid pathways.

The method of any preceding clause, wherein the composite component is a ceramic matrix composite component.

The method of any preceding clause, further comprising compacting the ply layup.

The method of any preceding clause, wherein curing the ply layup comprises firing or burning out the ply layup.

A composite component, comprising a plurality of plies, each ply comprising a plurality of unidirectional arrays of fiber tows, the plurality of plies laid up in a ply stack having a plurality of layers, the plurality of layers having an outermost layer and an innermost layer; and a plurality of fluid pathways defined in the plurality of plies, each fluid pathway of the plurality of fluid pathways having a length extending parallel to the respective plurality of unidirectional arrays of fiber tows of the respective ply, wherein the fluid pathways of the plurality of fluid pathways per unit area of a ply of the plurality of plies decreases in number from the outermost layer to the innermost layer.

The composite component of any preceding clause, wherein the plurality of plies comprises at least a first ply and a second ply.

A composite component, comprising a first ply having a first plurality of unidirectional arrays of fiber tows, the first ply defining a plurality of first fluid pathways, each first fluid pathway of the plurality of first fluid pathways having a first length greater than a first width; and a second ply having a second plurality of unidirectional arrays of fiber tows, the second ply defining a plurality of second fluid pathways, each second fluid pathway of the plurality of second fluid pathways having a second length greater than a second width, wherein a respective one first fluid pathway of the plurality of first fluid pathways is fluidly connected to at least one second fluid pathway of the plurality of second fluid pathways, wherein the first ply has a first ply thickness $t_1$ and the plurality of first fluid pathways are laterally spaced apart from one another by a distance $m$, and wherein a ratio of the distance $m$ to the first ply thickness $t_1$ is within a range of 0.25:1 to 10:1.

The composite component of any preceding clause, wherein the second ply has a second ply thickness $t_2$ and the plurality of second fluid pathways are laterally spaced apart from one another by the distance $m$, and wherein a ratio of the distance $m$ to the second ply thickness $t_2$ is within a range of 0.25:1 to 10:1.

The composite component of any preceding clause, wherein the composite component defines a plurality of pores, wherein the plurality of pores has a characteristic pore size, and wherein a characteristic width of the plurality of first fluid pathways and the plurality of second fluid pathways is within a range of two times greater to twenty times greater than the characteristic pore size.

The composite component of any preceding clause, further comprising a plurality of additional plies, each additional ply of the plurality of additional plies having a plurality of unidirectional arrays of fiber tows, each additional ply of the plurality of additional plies defining a plurality of fluid pathways, each fluid pathway of the plurality of fluid pathways having a length greater than a width, wherein each additional ply of the plurality of additional plies is consecutively stacked with the first ply and the second ply in a ply stack such that each ply is a layer in the ply stack and such that a respective fluid pathway of the plurality of fluid pathways in each layer is fluidly connected with at least one fluid pathway of the plurality of fluid pathways in each adjacent layer to form a continuous fluid pathway through the ply stack.

This written description uses examples to disclose embodiments of the disclosure, including the best mode, and also to enable any person skilled in the art to practice the disclosure, including making and using any devices or systems and performing any incorporated methods. The patentable scope of the disclosure is defined by the claims and may include other examples that occur to those skilled in the art. Such other examples are intended to be within the scope of the claims if they include structural elements that do not differ from the literal language of the claims or if they include equivalent structural elements with insubstantial differences from the literal language of the claims.

**Claims**

1. A composite component (100), comprising:

   a first ply (112) having a first plurality (114) of unidirectional arrays of fiber tows (102) extending in a first direction (116);
   a second ply (122) having a second plurality (124) of unidirectional arrays of fiber tows (102) extending in a second direction (126);
   a first fluid pathway (115) defined in the first ply (112), the first fluid pathway having a first length ($l_1$) in a first length direction and a first width ($w_1$) in a first width direction (117) normal to the first length direction, the first length ($l_1$) greater than the first width ($w_1$); and
   a second fluid pathway (125) defined in the second ply (124), the second fluid pathway having a second length ($l_2$) in a second length direction and a second width ($w_2$) in a second width direction (127) normal to the second length direction, the second length ($l_2$) greater than the second width ($w_2$).

2. The composite component of claim 1, wherein the first ply (112) has a first ply first surface (118) opposite a first ply second surface (120) and the second ply (122) has a second ply first surface (128) opposite a second ply second surface (130),

   wherein the first fluid pathway (115) comprises a first depth ($d_1$) extending from the first ply first surface (118) to the first ply second surface (120), the first length ($l_1$) greater than the first depth ($d_1$), and
   wherein the second fluid pathway (125) comprises a second depth ($d_2$) extending inward from the second ply first surface (128), the second length ($l_2$) greater than the second depth ($d_2$).

3. The composite component of claim 2, wherein the first ply (112) is stacked with the second ply (122) such that the first ply second surface (120) contacts the second ply first surface (128), and
   wherein the first fluid pathway (115) intersects the second fluid pathway (125) to define a continuous fluid pathway from the first fluid pathway (115) to the second fluid pathway (125).

4. The composite component of claim 3, wherein the second direction (126) is different from the first direction (116).

5. The composite component of claim 3 or 4, wherein the second direction (126) is offset 90° from the first direction (116).

6. The composite component of any preceding claim, further comprising:

   a third ply (132) having a third plurality (134) of unidirectional arrays of fiber tows (102) extending in a third direction (136); and
   a third fluid pathway (135) defined in the third ply (132), the third fluid pathway having a third length ($l_3$) in a third length direction and a third width ($w_3$) in a third width direction (137) normal to the third length direction, the third length greater than the third width.

7. The composite component of claim 6, wherein the second depth ($d_2$) extends from the second ply first surface (128) to the second ply second surface (130),

   wherein the third ply (132) has a third ply first surface (138) opposite a third ply second surface (140), and
   wherein the third fluid pathway (135) comprises a third depth ($d_3$) extending inward from the third ply first surface (138), the third length ($l_3$) greater than the third depth ($d_3$).

8. The composite component of claim 7, wherein the first ply (112), second ply (122), and third ply (132) are stacked together such that the first ply second surface (120) contacts the second ply first surface (128) and the second ply second surface (130) contacts the third ply first surface (138),

   wherein the first fluid pathway (115) intersects the second fluid pathway (125) to define a first continuous fluid pathway from the first fluid pathway (115) to the second fluid pathway (125), and
wherein the second fluid pathway (125) intersects the third fluid pathway (135) to define a second continuous fluid pathway from the second fluid pathway (125) to the third fluid pathway (135).

9.  The composite component of claim 8, wherein the second direction (126) is different from the first direction (116).

10. The composite component of claim 9, wherein the third direction (136) is the same as the first direction (116).

11. The composite component of any preceding claim, wherein the first ply (112) has a first ply thickness ($t_1$) and defines a plurality of first fluid pathways (115), wherein the plurality of first fluid pathways (115) are laterally spaced apart from one another by a distance ($m$), and wherein a ratio of the distance ($m$) to the first ply thickness ($t_1$) is within a range of 0.25:1 to 10:1.

12. The composite component of any preceding claim, further comprising:

    a first plurality of pores (106) defined in the first ply (112) and a second plurality of pores (106) defined in the second ply (122),
    wherein each pore (106) of the first plurality of pores (106) and each pore (106) of the second plurality of pores (106) is dimensionally smaller than both the first fluid pathway (115) and the second fluid pathway (125), wherein the first plurality of pores (106), the second plurality of pores (106), the first fluid pathway (115), and the second fluid pathway (125) are each voids in the composite component (100), and wherein the composite component (100) has a bimodal distribution of void sizes.

13. The composite component of any preceding claim, wherein the composite component (100) has a characteristic pore size, and wherein each of the first width ($w_1$) and the second width ($w_2$) are greater than the characteristic pore size.

14. The composite component of any preceding claim, wherein the composite component (100) has a characteristic pore size, and wherein each of the first width ($w_1$) and the second width ($w_2$) are within a range of two times greater to twenty times greater than the characteristic pore size.

15. The composite component of any preceding claim, wherein the composite component (100) is a ceramic matrix composite component, and wherein the composite component (100) is configured for densification using a chemical vapor infiltration process.

FIG. -1-

FIG. -2-

FIG. -3-

EP 4 289 804 A1

FIG. -4-

500

502

LAY UP FIRST PLY

504

LAY UP SECOND PLY

506

LAY UP THIRD PLY

508

LAY UP FOURTH PLY

510

LAY UP FIFTH PLY

512

LAY UP ADDITIONAL NUMBER N OF PLIES

514

CURE PLY LAYUP

516

DENSIFY PLY LAYUP TO FORM
COMPOSITE COMPONENT

# FIG. -5-

Europäisches
Patentamt

European
Patent Office

Office européen
des brevets

# EUROPEAN SEARCH REPORT

Application Number

EP 23 16 9804

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/024427 A1 (LILIEDAHL DAVID NOEL [US] ET AL) 28 January 2021 (2021-01-28) * abstract * * claims 1, 7 * * paragraphs [0019] – [0020], [0022], [0023], [0027] * * figures 1, 3A, 6 * | 1–15 | INV. C04B35/117 C04B35/14 C04B35/185 C04B35/565 C04B35/573 C04B35/584 C04B35/80 B32B18/00 |
| X | EP 3 825 298 A1 (RAYTHEON TECH CORP [US]) 26 May 2021 (2021-05-26) * claims 2, 5, 6, 8 * * paragraphs [0025], [0030] – [0031] * | 1–15 | B29C70/20 B29C70/54 |
| A | US 5 405 560 A (CHAREIRE JEAN-LOUIS [FR] ET AL) 11 April 1995 (1995-04-11) * abstract * * column 2, lines 49-55 * * column 3, lines 18-21 * | 12–14 | |
| X | US 2020/308066 A1 (SHIANG JOSEPH JOHN [US] ET AL) 1 October 2020 (2020-10-01) * abstract * * paragraphs [0033], [0040] * | 1,15 2–14 | TECHNICAL FIELDS SEARCHED (IPC) C04B B32B B29C |
| A | | | |
| A | WO 2006/129040 A2 (SNECMA PROPULSION SOLIDE [FR]; BERNARD BRUNO [FR] ET AL.) 7 December 2006 (2006-12-07) * abstract * * claim 1 * * figures 3-6, 15 * | 1–15 | |

The present search report has been drawn up for all claims

| Place of search | Date of completion of the search | Examiner |
|---|---|---|
| The Hague | 20 October 2023 | Buffet, Noemie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 9804

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2023

| Patent document cited in search report | | Publication date | Patent family member(s) | | Publication date |
|---|---|---|---|---|---|
| US 2021024427 | A1 | 28-01-2021 | NONE | | |
| EP 3825298 | A1 | 26-05-2021 | EP | 3825298 A1 | 26-05-2021 |
| | | | US | 2021155553 A1 | 27-05-2021 |
| US 5405560 | A | 11-04-1995 | US | 5405560 A | 11-04-1995 |
| | | | US | 5454990 A | 03-10-1995 |
| US 2020308066 | A1 | 01-10-2020 | FR | 3094366 A1 | 02-10-2020 |
| | | | US | 2020308066 A1 | 01-10-2020 |
| WO 2006129040 | A2 | 07-12-2006 | BR | PI0612015 A2 | 13-10-2010 |
| | | | CA | 2610160 A1 | 07-12-2006 |
| | | | CN | 101189447 A | 28-05-2008 |
| | | | EP | 1886046 A2 | 13-02-2008 |
| | | | FR | 2886640 A1 | 08-12-2006 |
| | | | IL | 187794 A | 31-10-2011 |
| | | | JP | 2008545894 A | 18-12-2008 |
| | | | KR | 20080016694 A | 21-02-2008 |
| | | | UA | 94228 C2 | 26-04-2011 |
| | | | US | 2009110877 A1 | 30-04-2009 |
| | | | WO | 2006129040 A2 | 07-12-2006 |

EPO FORM P0459

For more details about this annex : see Official Journal of the European Patent Office, No. 12/82